# EUROPÄISCHE PATENTANMELDUNG

(11) **EP 0 631 720 A1**
(43) Veröffentlichungstag der Anmeldung: **04.01.1995**
(21) Anmeldenummer: 94109469.0
(22) Anmeldetag: 20.06.1994
(51) Int. Cl.: A01K 5/02

(54) **Selbstfütterungsvorrichtung zur Versorgung von Haustieren, insbesondere Mastschweinen**

(30) Priorität: 02.07.1993 DE 4322004
(71) Anmelder: ARATOWERK WALTER VON TASCHITZKI GmbH & CO. KG, D-51107 Köln (DE)
(72) Erfinder: von Taschitzki, Rainer, D-51107 Köln (DE)
(74) Vertreter: Stachow, Ernst-Walther, Prof. Dr.

(57) **Zusammenfassung**

Die Erfindung bezieht sich auf eine Selbstfütterungsvorrichtung (1) zur Versorgung von Haustieren, insbesondere Mastschweinen, welche schüttfähiges Futter von unterschiedlicher Rieselfähigkeit spendet, wobei über einem Futtertrog (6) ein Futterbunker (8) vorgesehen ist, dessen Boden (9) eine Entnahmeöffnung aufweist, unter welcher eine Futterplatte (10) angeordnet ist, so daß sich zwischen dem Rand der Entnahmeöffnung des Futterbunkers (8) und der Futterplatte (10) ein waagerechter Futterentnahmeschlitz (11) bildet. Damit das futtersuchende Tier unmittelbar und mit äußerster Kraft auf den stockenden Futtervorrat einwirken kann, ist ein in den Bunker (8) lose eingehängtes Werkzeug (12) vorgesehen, welches mindestens ein Betätigungselement (7) aufweist, welches zum Tier hin durch den Futterentnahmeschlitz (11) hindurch aus dem Bunker (10) hervorragt, so daß es, durch den Futterentnahmeschlitz (13) geführt, vom Tier hin- und herbewegbar ist.

## Beschreibung

Die Erfindung bezieht sich auf eine Selbstfütterungsvorrichtung zur Versorgung von Haustieren, insbesondere Mastschweinen, welche schüttfähiges Futter von unterschiedlicher Rieselfähigkeit spendet, wobei über einem Futtertrog ein Futterbunker vorgesehen ist, dessen Boden eine Entnahmeöffnung aufweist, unter der eine Futterplatte angeordnet ist, so daß sich zwischen dem Rand der Entnahmeöffnung des Futterbunkers und der Futterplatte ein waagerechter Futterentnahmeschlitz bildet. Dabei verhindert die Futterplatte einerseits, daß das Futter gänzlich aus dem Futterbunker herausrieselt, andererseits gibt der Futterentnahmeschlitz jedoch eine gewisse Menge des Futters zur Entnahme frei.

Da es bei Futtermischungen von geringer Rieselfähigkeit vorkommt, daß das im Bunker befindliche Futter ins Stocken gerät, so daß die futtersuchenden Tiere auf der Futterplatte nichts vorfinden, ist es wünschenswert, im Bunker eine Vorrichtung zu integrieren, mit welcher das stockende Futter aufgelockert und seine Rieselfähigkeit verbessert werden kann.

Bei Selbstfütterungsvorrichtungen, die mit einer vom Tier zu betätigenden Entnahmevorrichtung versehen sind, wie z.B. die in der DE 39 37 602 A 1 beschriebene Vorrichtung, sind bereits Elemente für die Auflockerung des Futtervorrates bekannt, welche in Verbindung mit der besagten Futterentnahmevorrichtung stehend deren Bewegungen auf den Futtervorrat übertragen sollen. Solche Ausbildungen haben jedoch den Nachteil, daß die vom Tier ausgeübte Krafteinwirkung, weil sie nur mittelbar über die Entnahmevorrichtung auf das Lockerungselement übertragen werden kann, trotz größtmöglicher Anstrengung nicht den erhofften Erfolg erzielt; zumal das Tier dabei nur mit seiner Schnauzenspitze arbeiten kann. Somit haben derartige Vorrichtungen sogar einen negativen Effekt, indem die nur mittelbar über die Futterentnahmevorrichtung zu betätigenden Auflockerungselemente die Futterentnahme mehr behindern, als daß sie diese fördern.

Aufgabe der Erfindung ist es daher, eine Selbstfütterungsvorrichtung der eingangs genannten Art zu schaffen, die eine effektivere vom Tier bewirkte Auflockerung des Futters bei stockendem Futtervorrat gewährleistet.

Diese Aufgabe wird erfindungsgemäß dadurch gelöst, daß bei einer Selbstfütterungsvorrichtung der eingangs genannten Art für das fressende Tier ein in den Bunker lose eingehängtes Werkzeug zum Auflockern des Futtervorrates vorgesehen ist, welches mindestens ein Betätigungselement aufweist, welches zum Tier hin durch den Futterentnahmeschlitz hindurch aus dem Bunker hervorragt, so daß es, durch den Futterentnahmeschlitz geführt, vom Tier hin- und herbewegbar ist.

Aufgrund dieser Lösung wird dem futtersuchenden Tier ein Werkzeug zur Verfügung gestellt, mit dem es unmittelbar und mit äußerster Kraft auf den stockenden Futtervorrat einwirken kann.

In einer bevorzugten Weiterbildung des Anmeldungsgegenstandes sind an dem bzw. den zum Tier hin hervorragenden Betätigungselementen je ein Betätigungsorgan angeordnet.

Die Betätigungsorgane können in etwa eiförmig ausgebildet sein. Dies ermöglicht dem Tier einen festen Zugriff mit dem ganzen Maul. Somit steht dem Tier ein äußerst effektives Werkzeug dafür zur Verfügung, durch unmittelbare Einwirkung auf den ins Stocken geratenen Futtervorrat eine weitere Portion Futter zu erhalten.

Die Betätigungsorgane können zweckmäßigerweise an den Betätigungselementen abnehmbar befestigt sein. Insbesondere kann die Befestigung durch Verschraubungselemente erfolgen.

Das vom Tier zu betätigende Werkzeug ist vorzugsweise einstückig ausgebildet und kann eine einfache Gestalt aufweisen. Bevorzugt weist das Werkzeug die Gestalt eines einfachen Bügels auf, dessen beide Enden zum Tier hin durch den Futterentnahmeschlitz ragen und die Betätigungselemente bilden. An den Enden des Bügels können dann durch Verschraubungselemente oder dergleichen in etwa eiförmige Betätigungsorgane abnehmbar befestigt sein.

Der Anmeldungsgegenstand ist im folgenden anhand des in den Figuren dargestellten Ausführungsbeispiels näher erläutert.

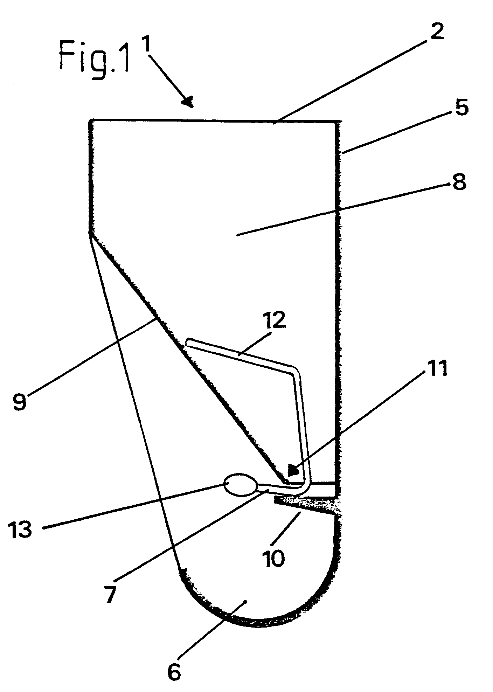

- Figur 1: zeigt ein Ausführungsbeispiel der Fütterungsvorrichtung im Aufriß und im Längsschnitt schematisch;

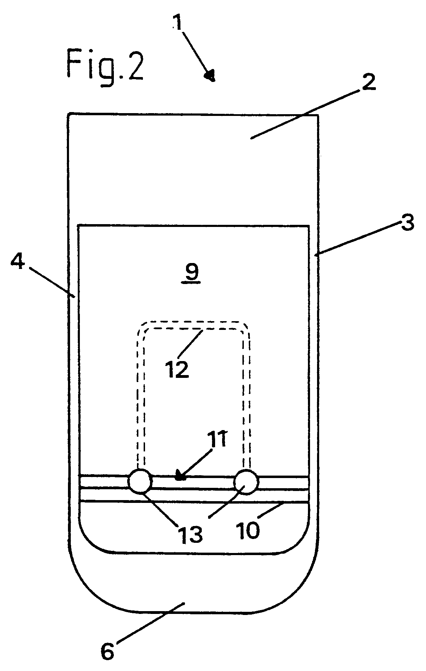

- Figur 2: stellt einen Schnitt nach der Linie II-II in Figur 1 dar.

Die Selbstfütterungsvorrichtung 1 zur Versorgung von Haustieren, insbesondere Mastschweinen, besteht aus einem Gehäuse 2, bei welchem sich im unteren Teil aus den zusammenlaufenden Enden der Seitenwände 3 und 4 und der Rückwand 5 ein Futtertrog 6 bildet, während im oberen Teil ein Futterbunker 8 gebildet wird, und zwar zwischen den Seitenwänden 3 und 4, der Rückwand 5 sowie der vorderen Wand, deren schräg nach hinten verlaufender Teil den Boden 9 des Futterbunkers 8 bildet.

Der schräg nach unten verlaufende Boden 9 des Futterbunkers 8 stößt nicht an die Rückwand 5 an, so daß sich zwischen der Unterkante des Bodens 9 und der darunter angeordneten Futterplatte 10 ein Entnahmeschlitz 11 bildet, in welchem ein Betätigungselement 7 eines in den Futterbunker 8 integrierten Werkzeugs 12 bei seiner durch das Tier hervorgerufenen Bewegung hin- und hergeführt wird. Dabei kann das Werkzeug 12 vom Tier sowohl längs des Futterentnahmeschlitzes verschoben als auch in dazu senkrechter Richtung gekippt werden, so daß sich eine in allen drei Dimensionen mögliche und das Futter auflockernde Bewegung ergibt.

Das Werkzeug 12 ist in Form eines einfachen Bügels ausgebildet, dessen beide Enden zum Tier hin durch den Futterentnahmeschlitz 11 ragen und zwei Betätigungselemente 7 bilden. Die Betätigungselemente 7 sind mit je einem Betätigungsorgan 13 versehen, das in etwa eiförmig ausgebildet ist und am zugeordneten Betätigungselement 7 abnehmbar befestigt ist.

Wenn der Futtervorrat im Futterbunker 8 ins Stocken gerät und aus dem Futterentnahmeschlitz 11 nichts mehr herausrieselt, kann das futtersuchende Tier mit Hilfe der Betätigungsorgane 13 das Werkzeug 12 in Bewegung setzen und somit unmittelbar auf den Futtervorrat einwirken, um ihn aufzulockern, so daß aus dem Entnahmeschlitz 11 eine neue Portion Futter freigegeben wird.

Da diese Betätigung des Werkzeugs 12 unmittelbar erfolgt und das futtersuchende Tier das Betätigungsorgan 13 nötigenfalls fest ins Maul nehmen kann, ist es in der vorteilhaften Lage, damit äußerst intensiv auf den ins Stocken geratenen Futtervorrat einzuwirken und einen vollen Erfolg seiner Mühe zu erzielen.

### Bezugszeichenliste

- 1: Förderungsvorrichtung
- 2: Gehäuse
- 3: Seitenwand
- 4: Seitenwand
- 5: Rückwand
- 6: Futtertrog
- 7: Betätigungselement
- 8: Futterbunker
- 9: Boden
- 10: Futterplatte
- 11: Futterentnahmeschlitz
- 12: Werkzeug
- 13: Betätigungsorgan

## Patentansprüche

1. Selbstfütterungsvorrichtung zur Versorgung von Haustieren, insbesondere Mastschweinen, welche schüttfähiges Futter von unterschiedlicher Rieselfähigkeit spendet, wobei über einem Futtertrog ein Futterbunker vorgesehen ist, dessen Boden eine Entnahmeöffnung aufweist, unter der eine Futterplatte angeordnet ist, so daß sich zwischen dem Rand der Entnahmeöffnung des Futterbunkers und der Futterplatte ein waagerechter Futterentnahmeschlitz bildet, **dadurch gekennzeichnet**, daß für das fressende Tier ein in den Bunker (8) lose eingehängtes Werkzeug (12) zum Auflockern des Futtervorrates vorgesehen ist, welches mindestens ein Betätigungselement (7) aufweist, welches zum Tier hin durch den Futterentnahmeschlitz (11) hindurch aus dem Bunker (8) hervorragt, so daß es, durch den Futterentnahmeschlitz (13) geführt, vom Tier hin- und herbewegbar ist.

2. Selbstfütterungsvorrichtung nach Anspruch 1, **dadurch gekennzeichnet**, daß an dem bzw. den zum Tier hin hervorragenden Betätigungselementen (7) je ein Betätigungsorgan (13) angeordnet ist.

3. Selbstfütterungsvorrichtung nach Anspruch 2, **dadurch gekennzeichnet**, daß die Betätigungsorgane (13) in etwa eiförmig ausgebildet sind.

4. Selbstfütterungsvorrichtung nach Anspruch 2 oder 3, **dadurch gekennzeichnet**, daß die Betätigungsorgane (13) an den Betätigungselementen (7) abnehmbar befestigt sind.

5. Selbstfütterungsvorrichtung nach Anspruch 4, **dadurch gekennzeichnet**, daß die Betätigungsorgane (13) an den Betätigungselementen (7) durch Verschraubungselemente oder dergleichen befestigt sind.

6. Selbstfütterungsvorrichtung nach einem der Ansprüche 1 bis 5, **dadurch gekennzeichnet**, daß das Werkzeug (12) die Gestalt eines einfachen Bügels aufweist, dessen beide Enden zum Tier hin durch den Futterentnahmeschlitz (17) ragen und die Betätigungselemente (7) bilden.
